**Europäisches Patentamt**

**European Patent Office**

**Office européen des brevets**

(11) Numéro de publication: **0 214 003 B1**

(12) **FASCICULE DE BREVET EUROPEEN**

(45) Date de publication du fascicule du brevet:
**03.05.89**

(51) Int. Cl.⁴: **F 23 R 3/10,** F 02 C 7/00, F 23 R 3/26

(21) Numéro de dépôt: **86401657.1**

(22) Date de dépôt: **24.07.86**

(54) **Dispositif d'injection à bol elargi pour chambre de combustion de turbomachine.**

(30) Priorité: **02.08.85 FR 8511842**

(43) Date de publication de la demande:
**11.03.87 Bulletin 87/11**

(45) Mention de la délivrance du brevet:
**03.05.89 Bulletin 89/18**

(84) Etats contractants désignés:
**DE FR GB**

(56) Documents cités:
**FR-A- 2 194 881**
**FR-A- 2 505 401**
**GB-A- 663 639**
**GB-A- 682 778**
**GB-A- 1 572 336**
**GB-A- 2 085 147**
**GB-A- 2 134 243**

(73) Titulaire: **SOCIETE NATIONALE D'ETUDE ET DE CONSTRUCTION DE MOTEURS D'AVIATION, "S.N.E.C.M.A.", 2 Boulevard Victor, F-75015 Paris (FR)**

(72) Inventeur: **Bayle LaBoure, Gérard Joseph Pascal, 7, bis rue Rémy Dumoncel, F-77210 Avon (FR)**
Inventeur: **Desaulty, Michel André Albert, 2, rue de la Pierre Décollée, F-77240 Vert Saint Denis (FR)**
Inventeur: **Perigne, Jérome, 1, Allée des Tilleuls, F-77000 Vaux le Penil (FR)**
Inventeur: **Sandelis, Denis Jean Marice, 1, Allée A-Dubois, F-77370 Nangis (FR)**

(74) Mandataire: **Moinat, François, S.N.E.C.M.A. Service des Brevets Boîte Postale 81, F-91003 Evry Cédex (FR)**

ACTORUM AG

## Description

L'invention concerne l'alimentation en carburant et en air primaire d'une chambre de combustion notamment pour turbomachine.

Les chambres de combustion traditionnelles sont généralement divisées en deux zones pour assurer une stabilité et un rendement corrects sur une large plage de fonctionnement. Elles comprennent donc une zone primaire alimentée par une fraction d'air primaire à richesse élevée et une zone de dilution alimentée par le débit d'air restant permettant de refroidir les gaz issus de la zone primaire et d'ajouter la répartition de la température des gaz en sortie de chambre aux conditions de tenue de la turbine.

Le débit d'air à injecter en zone primaire doit être calculé en fonction d'un compromis entre les contraintes liées au fonctionnement plein gaz telles que émission de fumées, tenue thermique des parois, et les performances de la chambre nécessaires au ralenti comme la stabilité de flamme et le maintien d'un rendement convenable.

Toutefois ce compromis est de plus en plus difficile à trouver sur les chambres de moteurs modernes en raison des normes de pollution plus sévères, de la diminution de taille des chambres de combustion ou de l'obligation de diversification des carburants.

Une première solution a consisté à créer des chambres à deux modules, l'un adapté au régime de ralenti et l'autre au régime de pleins gaz. Ce type de chambre est lourd et couteux et pose des problèmes de régulation aux régimes intermédiaires.

Une autre solution consiste à réaliser des systèmes d'injection à géométrie variable où des volets mobiles permettent de diaphragmer plus ou moins les entrées d'air de la chambre ce qui amène une réduction substantielle du volume de combustion, donc de l'encombrement de la chambre, par une optimisation continue du fonctionnement de la chambre. Une telle solution est décrite dans la demande de brevet français FR-A-2 572 463.

Ce type de chambre utilise généralement des injecteurs aérodynamiques à bols intermédiaires du type correspondant à ceux décrits dans le brevet antérieur US-A-4 162 611. Selon ce brevet, les injecteurs sont montés sur le fond de chambre avec interposition d'une pièce intermédiaire appelée bol comportant une jante tronconique évasée vers l'aval et percée d'une multiplicité de trous de faible diamètre par lesquels de l'air à vitesse élevée pénètre dans le cône de carburant pulvérisé. Ce bol complète le rôle de l'injecteur par les turbulences qu'il engendre, améliorant la pulvérisation du carburant et son mélange avec l'air.

Un autre type d'injecteur à bol intermédiaire, tel que décrit dans le document GB-A-2 134 243, comporte sous la jante tronconique une circulation d'air destinée à réaliser tangentiellement à la paroi de fond de chambre un film pariétal de refroidissement. Toutefois, ce document ne mentionne pas la présence dans la jante d'orifices de sortie d'air de pulvérisation du carburant et ne répond pas aux objectifs visés ici.

Dans le cadre d'études sur la stabilité au ralenti de ces chambres de combustion à bol intermédiaire, à géométrie variable ou non, on s'est rendu compte que la stabilité de flamme pouvait être améliorée par une augmentation du volume réactif au ralenti et par une meilleure homogénéisation du carburant pulvérisé dans la zone primaire. Or, au ralenti le débit de carburant injecté étant relativement faible, le volume réactif est plus confiné vers le fond de la chambre et l'augmentation de ce volume ne peut s'effectuer que par élargissement du diamètre du bol.

Toutefois, cet élargissement a pour conséquence d'augmenter le temps de séjour du carburant dans le bol, ce qui présente pour inconvénient un risque d'auto-inflammation du carburant dans les conditions de fonctionnement où pression et température à l'amont de la chambre sont élevées. Ce risque sera encore augmenté sur les moteurs d'avions futurs pour lesquels le taux de compression va en croissant. Cette auto-inflammation peut amener à des brûlures du bol dommageables pour le fonctionnement de la chambre et nécessitant un entretien plus fréquent et donc des périodes d'inutilisation du moteur plus longues.

La présente invention vise donc à améliorer le refroidissement des bols intermédiaires tels que décrits dans les documents mentionnés plus haut. Elle a également pour but d'améliorer le fonctionnement au ralenti des chambres de combustion ainsi formées, à géométrie fixe ou variable, par un accroissement du diamètre de la zone de recirculation n'amenant pas de surchauffe excessive du bol intermédiaire malgré une augmentation du temps de séjour du carburant.

Elle vise également à réaliser un type particulier de chambre à bol intermédiaire élargi, les trous de sortie d'air de pulvérisation étant percés sur un diamètre du bol supérieur à celui de la coupelle de fond de chambre qui reçoit le bol intermédiaire. Ce diamètre de coupelle est lui-même limité par les problèmes de tenue mécanique du fond de chambre. L'invention s'applique donc à un dispositif d'injection de carburant pour chambre de combustion de turbomachine comprenant au moins un injecteur du type à pulvérisation ou à prévaporisation comportant au moins une vrille de turbulence externe, le dispositif comprenant un bol intermédiaire disposé entre la vrille de turbulence externe et une coupelle circulaire découpée dans le fond de la chambre de combustion, le bol comportant une chemise d'impact amont percée d'au moins une première rangée d'orifices d'entrée d'air primaire et en combinaison un voile évasé vers l'aval percé d'au moins une rangée d'orifices de sortie d'air de pulvérisation du combustible dirigés vers l'axe de la chambre de combustion, la chemise d'impact et le voile évasé étant solidarisés à chacune de leurs extrémités pour former une chambre intermédiaire.

Conformément à l'invention, le voile aval se développe en arrondi vers l'aval en s'évasant vers l'extérieur, le diamètre externe du voile étant supérieur à celui de la coupelle de fond de chambre de telle sorte que la rangée d'orifices de sortie d'air de pulvérisation du voile aval est régulièrement répartie sur un cercle de diamètre supérieur à celui de la coupelle au voisinage le plus proche du bord externe du voile.

Selon l'invention lorsque le bol ainsi décrit est utilisé en combinaison avec un corps d'injecteur à injection annulaire radiale du carburant, le fond du bol est refroidi simultanément par impact d'air primaire au travers des orifices d'entrée de la chemise d'impact et par le film de carburant plaqué contre le voile aval, le carburant étant pulvérisé au voisinage le plus proche du diamètre externe du bol par l'air de pulvérisation issu des orifices de sorties.

Selon un mode préféré de réalisation, le bol selon l'invention comprend une collerette circulaire à section en «L» fixée sur le bord interne de la coupelle et une collerette circulaire aval elle aussi à section en «L» dont la petite branche s'appuie sur la collerette amont et la grande branche s'étend radialement vers l'extérieur de la coupelle en formant une extension annulaire plane orthogonale à l'axe du corps d'injecteur. Le voile aval comprend une portée cylindrique s'appuyant sur le pourtour de la vrille de turbulence externe qui va se développant en arrondi vers l'aval en s'évasant vers l'extérieur pour se raccorder sur la périphérie externe de l'extension annulaire plane de la collerette aval tandis que la chemise d'impact comprend une portée cylindrique s'appuyant sur celle du voile aval et se raccorde sur la collerette amont.

Selon une caractéristique de l'invention le diamètre et le nombre des orifices de sortie de bol sont tels que le débit de sortie d'air associé soit égal au maximum à 12% du débit d'air total de la chambre, les 88% restants étant admis par les orifices d'admission des parois de la chambre et par les autres orifices d'admission du système d'injection. En outre, la chemise d'impact peut comporter une deuxième rangée d'orifices d'entrée d'air primaire dans la chambre intermédiaire admettant le tiers du débit d'air, les deux tiers restants étant admis par la première rangée d'orifices d'entrée.

Dans une variante préférée de réalisation, la première rangée d'orifices d'entrée peut être diaphragmée de la pleine fermeture au ralenti jusqu'à la pleine ouverture au régime plein gaz, le moyen de commande du diaphragme étant actionné par un système écrou-vis sans fin ou par un vérin porté par le carter externe de la chambre de combustion.

D'autres caractéristiques seront explicitées en regard des planches de dessins représentant de façon non limitative des modes de réalisation de l'invention:

La figure 1 montre en demi-coupe longitudinale un premier mode de réalisation du bol selon l'invention utilisé en combinaison avec un injecteur à double vrille.

La figure 2 montre en demi-coupe longitudinale une variante de réalisation du bol dans lequel la chemise d'impact comporte deux rangées principales d'orifices d'entrée d'air primaire.

La figure 3 montre en demi-coupe longitudinale un deuxième mode de réalisation de l'invention utilisé ici en combinaison avec un injecteur simplifié à injection radiale.

Dans ce mode de réalisation, la chemise d'impact possède deux rangées d'orifices d'entrée d'air dont une est diaphragmée pour diminuer le débit d'air primaire au ralenti.

La figure 4 montre en regard de ce mode de réalisation les positions extrêmes du diaphragme vu depuis l'amont (figure 4a au ralenti, 4c aux pleins gaz) et une position médiane (figure 4b).

La figure 5 montre le dispositif de commande du diaphragme des bols adjacents d'un secteur de chambre de combustion annulaire.

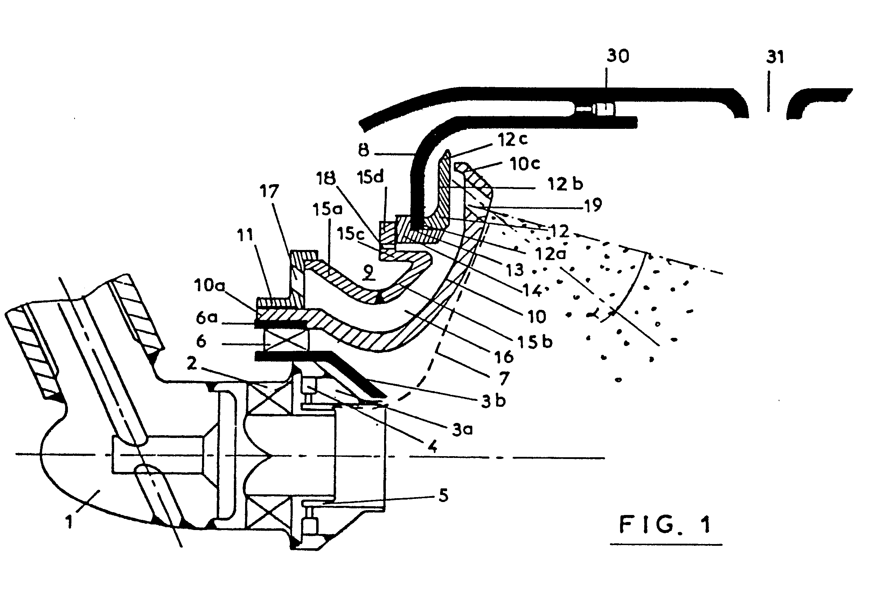

Sur la figure 1 où est représentée le premier mode de réalisation de l'invention, on voit l'extrémité amont d'une chambre de combustion annulaire pour turbomachine.

Une partie de l'air provenant du compresseur est guidée à travers le système d'injection pour former avec le carburant un mélange carburé qui passera dans la zone primaire où ont lieu les opérations de combustion. Les gaz produits sont dilués et refroidis dans la zone secondaire de la chambre, non représentée puis distribués vers la turbine qu'ils entraînent.

Dans le mode de réalisation de la figure 1, on a représenté le bol selon l'invention utilisé en combinaison avec un injecteur aérodynamique connu comprenant un corps central d'amenée de carburant 1 prolongé vers l'aval par des ailettes de tourbillonnement constituant une vrille de turbulence interne 2 centripète. Un chapeau annulaire 3a pourvu d'un canal interne 4 est alimenté en carburant par des canaux percés à l'intérieur des ailettes de la vrille 2 et débouchant par une fente annulaire 5 dans le canal tubulaire raccordant la vrille interne au chapeau 3a. Sur le chapeau annulaire 3b co-axial au chapeau 3a est montée une rangée d'ailettes formant une vrille de turbulence externe 6 à écoulement sensiblement axial. Par la combinaison des deux vrilles interne 2 et externe 6, la nappe 7 de carburant émergeant de la fente 5 est centrifugée sur les parois du bol tel qu'il va être décrit plus loin. L'injecteur 1 avec sa vrille de turbulence externe 6 est raccordé au fond 8 de la chambre de combustion par une pièce de forme générale annulaire globalement appelée bol et référencée 9. Ce bol 9 comprend un voile aval 10 comportant une première portée 10a cylindrique coaxiale à la portée cylindrique externe 6a de la vrille externe 6, la portée 10a étant filetée extérieurement pour recevoir une bague 11 décrite plus loin. Le voile aval 10 se développe en arrondi vers l'aval pour se raccorder sur la périphérie d'une collerette aval 12 annulaire de section en forme de «L» dont la petite branche 12a est soudée au droit de l'ouverture de la coupelle 13 découpée dans le fond de chambre 8. A l'intérieur de cette coupelle est positionnée une seconde collerette dite collerette amont 14, elle aussi annulaire à section en «L» dont la petite branche est soudée sur la partie externe amont de la coupelle et dont la grande branche est adjacente à la partie 12a de la collerette aval 12. La partie 12b de la collerette aval forme radialement à l'extérieur de la coupelle, une extension annulaire plane orthogonale à l'axe de l'injecteur et sur la périphérie 12c de laquelle vient se raccorder l'extrémité 10c du voile aval.

Entre la portée 10a du voile 10 et la collerette amont 14 est disposée une chemise d'impact 15. Dans le mode de réalisation de la figure 1, elle est réalisée sous la forme d'un voile amont comprenant une première partie 15a rétreinte vers l'aval et une seconde partie 15b soudée à la partie 15a et évasée vers l'aval comprenant une extrémité 15c replié vers l'amont formant une portée cylindrique raccordée à une plaque annulaire 15d plaquée contre la collerette amont. Sur l'extrémité amont de la portée 15a est soudée la bague 11 en forme de double «L» possédant un filetage permettant l'assemblage de la chemise d'impact sur le voile aval 10. Celui-ci forme avec la chemise d'impact 15 et la bague 11 une chambre intermédiaire 16. Cette dernière est alimentée an air amont par une première rangée d'orifices 17 percés sur la partie médiane de la bague 11 et par une deuxième rangée d'orifices 19 de diamètre plus faible que les orifices 17, percés dans la plaque annulaire 15d de la chemise d'impact et débouchant la portée 15c et la partie cylindrique de la collerette amont 14 afin de ventiler la partie du voile aval la plus éloignée de l'axe du bol. Le voile aval est percé d'une rangée d'orifices de sortie d'air 19 disposés sur un cercle de diamètre supérieur à celui de la coupelle 13 au voisinage le plus proche possible de la périphérie 10c du voile aval.

Ainsi dans l'ensemble de la figure 1, alors que la coupelle a un rayon égal approximativement à 0,6 fois le rayon de la chambre si celle-ci est tubulaire, ou 0,6 fois la demi-différence des rayons externe et interne de la chambre si elle est annulaire, on peut voir que les orifices 19 sont disposés sur un cercle de rayon égal à 0,8 fois le rayon de la chambre.

On voit également sur la figure 1 que, au droit de la couronne d'orifices 19 de sortie d'air de pulvérisation, le voile aval forme sensiblement un tronc de cône dont l'ouverture est supérieure à 110° et de préférence proche de 130° tandis que les axes des orifices de sortie 19 sont orientés vers le centre de la chambre d'un angle $\alpha$ compris entre 20° et 30° par rapport à la normale à la génératrice du cône de façon à délimiter la zone primaire. La structure du bol ainsi défini permet d'obtenir la pulvérisation du film de carburant au droit des orifices 19 après que le film de carburant ait participé depuis sa sortie de l'injecteur au refroidissement de la totalité de la surface du voile aval du bol en combinaison avec le refroidissement obtenu par impact de l'air amont au travers des orifices d'entrée 17 et 18.

Le nombre des orifices 19 est calculé et leur diamètre dimensionné de façon à ce que les orifices 19 débitent au maximum 12% de l'air alimentant la chambre, les 88% restants étant admis dans la chambre de combustion par les trous de la paroi de la chambre de combustion (orifices primaires 31, dispositifs de refroidissement, …) ainsi que par les autres orifices du système d'injection (vrilles 2 et 6).

Ainsi sans allonger la zone primaire à l'intérieur de la chambre, on a augmenté son volume par accroissement du diamètre de pulvérisation du film de carburant améliorant ainsi les performances au ralenti.

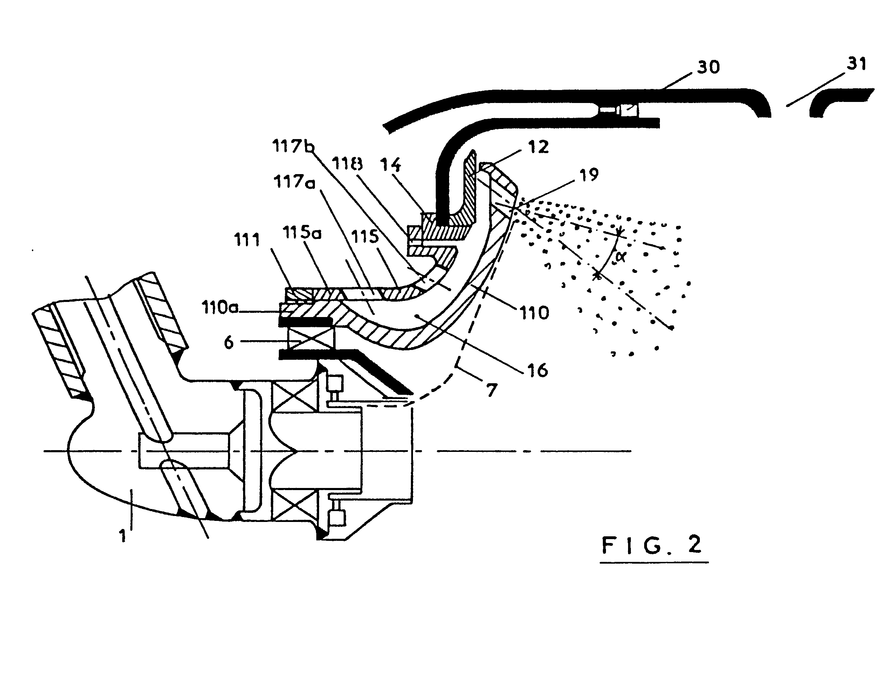

Sur la figure 2 on a représenté avec les mêmes références pour les parties identiques, une variante du mode de réalisation de la figure 1, dans laquelle le voile aval est identique à celui de la figure 1 et où la seule modification concerne la forme de la chemise d'impact et de la bague d'assemblage. Ainsi la chemise d'impact 115 comporte une portée cylindrique 115a ajustée au diamètre extérieur de la partie 110a du voile aval et la bague 111 est une simple bague filetée sans orifices d'entrée d'air.

L'entrée d'air dans la chambre intermédiaire est réalisée par deux rangées d'orifices principaux 117a et 117b percés dans la chemise d'impact, et admettant les deux tiers du débit d'entrée, et par une troisième rangée d'orifices 118 de diamètre plus faible, admettant le tiers du débit d'entrée d'air pour ventiler la collerette amont 14.

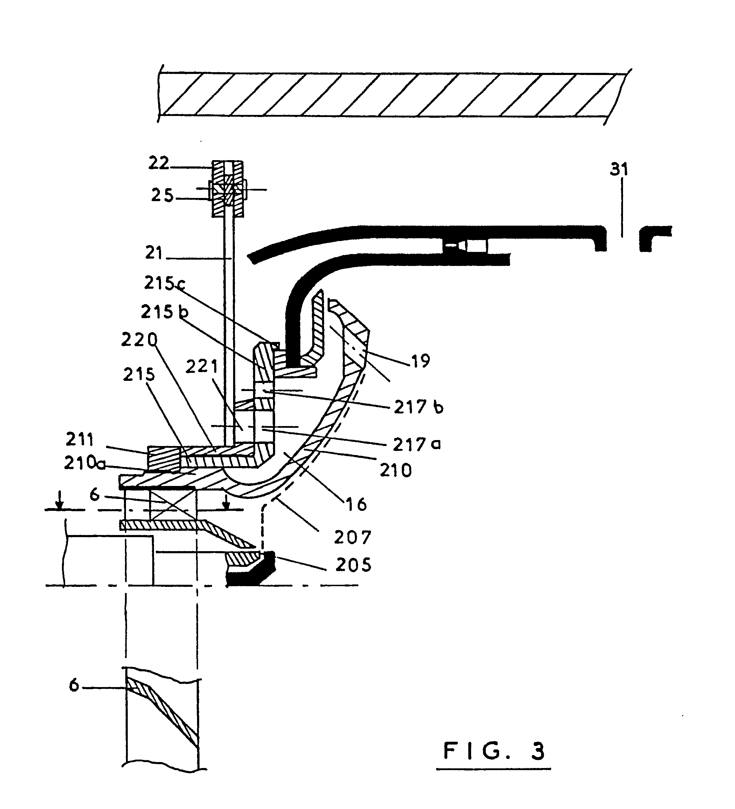

Dans le mode de réalisation de la figure 3 le bol selon l'invention est utilisé en combinaison avec un injecteur simplifié à injection annulaire radiale du carburant par une fente 205. Le film de carburant est plaqué contre le voile aval 210 du col sous l'action de l'air sortant de la vrille de turbulence externe 6.

La chemise d'impact 215 comporte une portée cylindrique 215a coaxiale à la partie 210a du voile aval et adjacente à un secteur plan 215b annulaire orthogonal à l'axe de l'injecteur et centré en 215c sur l'extérieur de la collerette amont. Une bague 211 permet la solidarisation du voile aval et de la chemise d'impact.

L'entrée d'air dans la chambre intermédiaire 16 est réalisée par deux rangées d'orifices 217a, 217b percés dans le secteur annulaire 215b, le nombre et le diamètre des orifices étant calculés pour que les orifices 217a admettent le tiers du débit d'entrée et les orifices 217b les deux tiers restants.

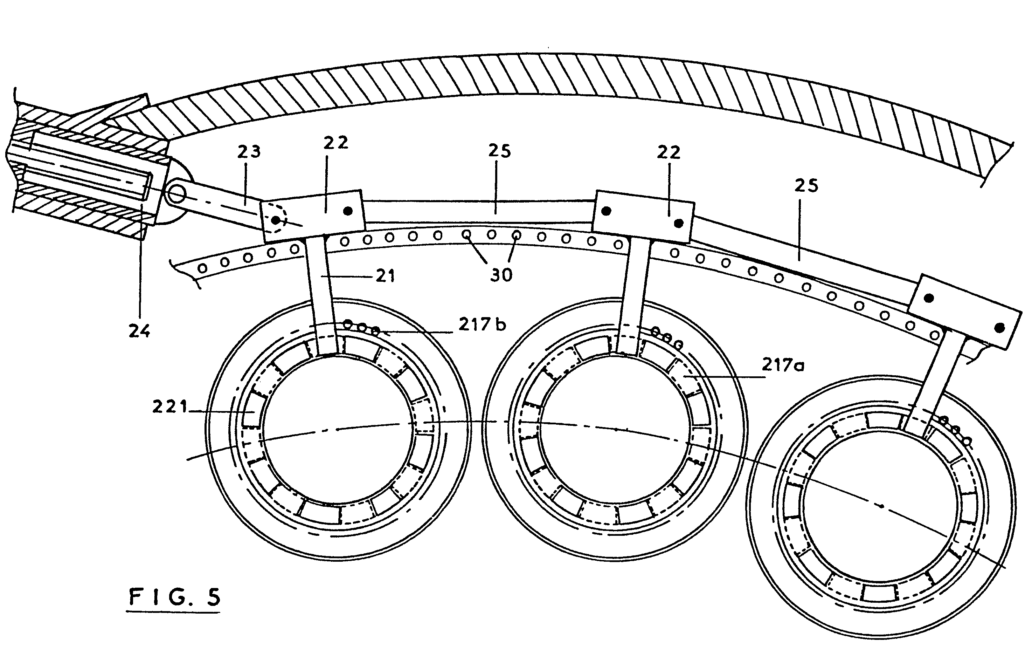

Dans ce mode de réalisation afin de s'approcher le plus possible des conditions de richesse optimale du mélange à tous les régimes de fonctionnement, la rangée d'orifices 217a est diaphragmée par une bague 220 montée à rotation sur la partie 215a de la chemise d'impact, entre la bague 211 et le secteur annulaire 215b. Le diaphragme 220 comporte un nombre égal d'orifices 221 de même diamètre que ceux 217a de la chemise d'impact. La rotation du diaphragme est assurée par un levier 21 relié par une pièce intermédiaire 22 à une biellette 23 elle même commandée par un système de déplacement 24 par exemple écrou-vis sans fin ou vérin porté par le carter externe du moteur (figure 5).

Dans une chambre de combustion annulaire comportant plusieurs bols intermédiaires répartis sur sa circonférence, les diaphragmes des bols adjacents peuvent être commandés par un seul système de déplacement, les pièces 22 étant reliées en série par des biellettes 25 disposées entre le carter extérieur du moteur et la paroi de la chambre de combustion et assurant la transmission du mouvement entre les pièces 22 adjacentes. Ainsi sont réalisées l'ouverture et la fermeture simultanée des diaphragmes de tous les bols de la chambre de combustion.

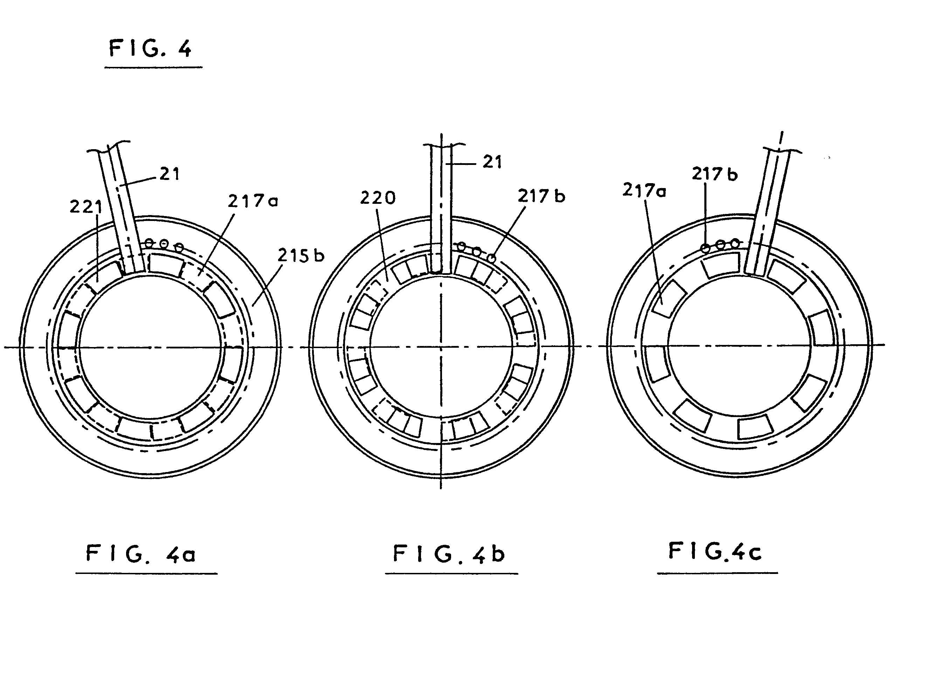

Au ralenti (figure 4a), les orifices 217a sont maintenus fermés de telle sorte que le débit d'air de pulvérisation sortant des orifices 19 soit égal au plus à 4% du total du débit de la chambre de combustion.

Au fonctionnement pleins gaz (fig. 4c) le débit des orifices de bol 19 représente 12% du débit total de la chambre et correspond à la pleine ouverture des orifices d'entrée 217a et 217b. Entre ces deux positions extrêmes (fig. 4b) le débit peut être modifié continûment au moyen du dispositif de commande écrou-vis sans fin 24 relié au levier de commande 21. Ainsi par exemple à mi-ouverture du diaphragme 220, le débit des orifices de bol représentera 8% du débit total de la chambre de combustion. Par la combinaison du diaphragme 220 de variation du débit d'air de pulvérisation permettant d'obtenir un mélange de richesse optimale à tous régimes de fonctionnement et par l'élargissement du volume de combustion effectif dû à l'élargissement du diamètre du cercle des orifices 19, on assure un meilleur compromis des divers paramètres de la chambre permettant une bonne stabilité à bas régimes, de bonnes qualités de pulvérisation et de répartition du carburant dans toutes les conditions de fonctionnement de la chambre.

En outre, un tel dispositif d'injection aérodynamique permet d'assurer une bonne tenue thermique du système d'injection au niveau de la paroi interne du bol (proche de l'axe de la chambre) refroidie par le carburant liquide ou gazeux issu de l'injecteur proprement dit, au niveau de la paroi externe du bol au voisinage de la collerette 14 refroidie par l'air introduit dans la chambre par les orifices de bol (18, 118, 218) ainsi que sur la périphérie du bol refroidi par l'air évacué par les orifices de sortie 19 et que sur la coupelle du fond de chambre refroidie par les recirculations d'air sous la collerette aval 12, recirculations qui permettent également d'éviter les dépôts de coke sur le fond de chambre.

L'invention s'applique donc avec profit aux turboréacteurs d'aviation à faible niveau de pollution.

## Revendications

1. Dispositif d'injection de carburant pour chambre de combustion de turbomachine comprenant au moins un injecteur du type à pulvérisation pneumatique ou à prévaporisation comportant au moins une vrille de turbulence externe, dispositif comprenant un bol intermédiaire disposé entre la vrille de turbulence externe et une coupelle circulaire découpée dans le fond de la chambre de combustion; le bol comportant une chemise d'impact amont percée d'au moins une première rangée d'orifices d'entrée d'air primaire et en combinaison un voile évasé vers l'aval percé d'au moins une rangée d'orifices de sortie d'air de pulvérisation du combustible dirigés vers l'axe de la chambre de combustion, la chemise et le voile évasé étant solidarisés à chacune de leurs extrémités pour former une chambre intermédiaire, dispositif caractérisé en ce que le voile aval (10, 110, 210), se développe en arrondi vers l'aval en s'évasant vers l'extérieur, le diamètre externe du voile étant supérieur à celui de la coupelle (13) de fond de chambre et en ce que la rangée d'orifice (19) de sortie d'air de pulvérisation du voile aval est régulièrement répartie sur un cercle de diamètre supérieur à celui de la coupelle (13) au voisinage le plus proche de la périphérie du voile.

2. Dispositif selon la revendication 1 utilisé en combinaison avec un corps d'injecteur (1) à injection annulaire radiale du carburant, caractérisé en ce que le refroidissement du fond de bol (210) est réalisé simultanément par impact d'air au travers des orifices d'entrée (217a, 217b, 218) de la chemise d'impact (215) et par le film de carburant (207) plaqué contre le voile aval (210), le carburant étant pulvérisé au voisinage le plus proche de la périphérie du bol par l'air de pulvérisation issu des orifices de sortie (19).

3. Dispositif selon l'une quelconque des revendications 1 ou 2, caractérisé en ce qu'il comprend une collerette circulaire amont à section en «L» fixée sur le bord interne de la coupelle et une collerette circulaire aval (12) à section en «L» dont la petite branche (12a) s'appuie sur la collerette amont (14) et dont la grande branche (12b) s'étend radialement vers l'extérieur de la coupelle formant une extension annulaire plane orthogonale à l'axe du corps d'injecteur, en ce que le voile aval (10, 110, 210) comprend une portée cylindrique (10a... 210a) s'appuyant sur le pourtour (6a) de la vrille de turbulence externe (6) et se développant en arrondi vers l'aval en s'évasant vers l'extérieur pour se raccorder sur la périphérie externe de l'extension annulaire plane (12b) de la collerette aval (12), en ce que la chemise d'impact (15, 115, 215) comprend une portée cylindrique (15a... 215a) s'appuyant sur celle (10a... 210a) du voile aval et se raccorde sur la collerette amont (14) et en ce que la rangée d'orifices (19) de sortie d'air de pulvérisation du voile aval est régulièrement répartie sur un cercle de diamètre supérieur au diamètre de la coupelle (13) au voisinage le plus proche de la ligne de raccordement du voile et de l'extension radiale annulaire de la collerette aval (12).

4. Dispositif selon l'une quelconque des revendications 1 à 3, pour chambre de combustion tubulaire, caractérisé en ce que la rangée d'orifices (19) de sortie d'air du bol est disposée sur un cercle de rayon comprise entre 0,70 et 0,80 fois le rayon de la chambre de combustion.

5. Dispositif selon l'une quelconque des revendications 1 à 4 pour chambre de combustion annulaire, caractérisé en ce que la rangée d'orifices (19) de sortie d'air du bol est disposée sur un cercle de rayon compris entre 0,70 et 0,80 fois la demi-différence des rayons externe et interne de la chambre de combustion.

6. Dispositif selon l'une quelconque des revendications 1 à 5, caractérisé en ce que la tangente au voile aval (10, 110, 210) au droit de la rangée d'orifices (19) de sortie d'air et passant par l'axe de l'injecteur (1) constitue la génératrice d'un cône d'angle au sommet supérieur à 110° et de préférence proche de 130°, l'axe de chaque orifice (19) de sortie étant orienté vers le centre de la chambre d'un angle compris entre 20° et 30° par rapport à la normale à ladite tangente.

7. Dispositif selon l'une quelconque des revendications 1 à 6 pour chambre de combustion comportant sur sa périphérie des orifices (30, 31) d'admission d'air primaire, caractérisé en ce que le débit des orifices de sortie (19) du bol en air de pulvérisation est au maximum égal à 12% du débit d'air total de la chambre les 88% restants étant admis par les autres orifices d'admission à la chambre et du système d'injection.

8. Dispositif selon la revendication 7, caractérisé en ce que la chemise d'impact comporte une deuxième rangée d'orifices (18, 118, 218), d'entrée d'air primaire disposés sur un cercle au voisinage de la collerette amont (14) aptes à admettre le tiers du débit d'air primaire entrant dans la chambre intermédiaire (16), la première rangée d'orifices (17, 117a, 117b, 217b, 217a, 217b) d'entrée admettant les deux tiers restants du débit entrant dans la chambre intermédiaire (16).

9. Dispositif selon la revendication 8, caractérisé en ce qu'il comporte un moyen (21, 22, 23, 220) commandant la fermeture des orifices (217a) de la première rangée d'orifices d'entrée de la chemise d'impact (215) au régime de ralenti de la chambre de combustion et leur ouverture progressive jusqu'à ouverture complète au régime de pleins gaz de la chambre.

10. Dispositif selon la revendication 9, caractérisé en ce que le moyen commandant l'ouverture et la fermeture des orifices d'entrée de la chemise d'impact est constituée par une bague (220) montée rotative autour de la portée cylindrique (215a) de la chemise d'impact et percée d'orifices en nombre égal à celui des orifices d'entrée (217a) et apte à se déplacer en rotation pour ouvrir ou fermer les orifices d'entrée sous l'action d'un levier de commande (21) solidaire de la bague et actionné par un système de commande (24) porté par le carter externe de la chambre de combustion.

11. Dispositif selon la revendication 10 pour chambre de combustion annulaire comprenant plusieurs bols intermédiaires régulièrement répartis sur le pourtour du fond de la chambre, caractérisé en ce que les leviers de commande (21) des bols adjacents sont reliés l'un à l'autre en série par des biellettes (25) et commandés par un système de commande (24) unique.

## Patentansprüche

1. Kraftstoff-Einspritzvorrichtung für die Brennkammer eines Turbo-Luftstrahltriebwerks mit wenigstens einer mit pneumatischer Zerstäubung oder Vorverdampfung arbeitenden Einspritzdüse mit wenigstens einer externen Turbulenz-Dralleinrichtung,

wobei die Vorrichtung eine zwischen dem externen Turbulenz-Dralleinsatz und einer in dem Boden der Brennkammer ausgeschnittenen kreisrunden Schüssel angeordnete Zwischenschale besitzt, die einen von wenigstens einer ersten Reihe von Primärluft-Eintrittsöffnungen durchdrungenen stromaufwärtigen Prallmantel, und in Kombination hiermit eine sich in stromaufwärtiger Richtung verbreiternde Schale aufweist, die von wenigstens einer Reihe von der Brennkammerachse zugewandten Luftaustrittsöffnungen zur Kraftstoffzerstäubung durchdrungen ist, wobei der Prallmantel und die sich verbreiternde Schale in ihren Endbereichen miteinander fest verbunden sind und eine Zwischenkammer bilden, dadurch gekennzeichnet,

daß die stromabwärtige Schale (10, 110, 210) in stromabwärtiger Richtung abgerundet ist und sich nach außen erweitert, wobei der Außendurchmesser der Schale größer ist als der Außendurchmesser der Schüssel (13) im Brennkammerboden,

und daß die in der stromabwärtigen Schale vorgesehene Reihe von Luftaustrittsöffnungen zur Kraftstoffzerstäubung regelmäßig auf einem Kreis verteilt ist, dessen Durchmesser größer ist als derjenige der Schüssel (13) in nächster Nachbarschaft der Peripherie der Schale.

2. Vorrichtung nach Anspruch 1 zur Verwendung in Kombination mit einem Einspritzdüsenkörper (1) mit ringförmiger radialer Kraftstoffeinspritzung, dadurch gekennzeichnet, daß die Kühlung des Boden der Zwischenschale (210) simultan mittels Luftaufprall durch die Eintrittsöffnungen (217a, 217b, 218) des Prallmantels (215) und mittels des an der stromabwärtigen Schale (210) haftenden Kraftstoff-Films (207) erfolgt, wobei der Kraftstoff in nächster Nachbarschaft der Peripherie der Zwischenschale durch die aus den Luftaustrittsöffnungen (19) kommende Zerstäubungsluft zerstäubt wird.

3. Vorrichtung nach einem der Ansprüche 1 und 2, dadurch gekennzeichnet,

daß sie einen stromaufwärtigen kreisrunden Kragen mit L-förmigem Querschnitt umfaßt, der am Innenrand der Schüssel befestigt ist, sowie einen stromabwärtigen kreisrunden Kragen (12) mit L-förmigem Querschnitt, dessen kurzer Schenkel sich auf dem stromaufwärtigen Kragen (14) abstützt und dessen langer Schenkel (12b) von der Schüssel radial nach aussen ragt und eine ringförmige ebene, zur Achse des Einspritzdüsenkörpers orthogonale Erweiterung bildet,

daß die stromabwärtige Schale (10, 110, 210) einen sich auf der äußeren Umfangsfläche (6a) des externen Turbulenz-Dralleinsatzes (6) abstützenden zylindrischen Bund (10a ... 210a) aufweist, der in stromabwärtiger Richtung abgerundet ist und sich nach außen verbreitert, um sich an den äußeren Umfang der ringförmigen ebenen Erweiterung (12b) des stromabwärtigen Kragens (12) anzuschließen,

daß der Prallmantel (15, 115, 215) einen zylindrischen Bund (15a ... 215a) besitzt, der sich auf dem Bund (10a ... 210a) der stromabwärtigen Schale abstützt und an den stromaufwärtigen Kragen (14) anschließt,

und daß die in der stromabwärtigen Schale vorgesehene Reihe von Austrittsöffnungen (19) für die Zerstäubungsluft regelmäßig auf einem Kreis verteilt ist, dessen Durchmesser größer ist als der Durchmesser der Schüssel (13) in nächster Nachbarschaft der Verbindungslinie der Schale und der radialen ringförmigen Erweiterung des stromabwärtigen Kragens (12).

4. Vorrichtung nach einem der Ansprüche 1 bis 3 für eine rohrförmige Brennkammer, dadurch gekennzeichnet, daß die Reihe der Luftaustrittsöffnungen (19) der Zwischenschale auf einem Kreis angeordnet ist, dessen Radius zwischen dem 0,70fachen und dem 0,80fachen des Radius der Brennkammer liegt.

5. Vorrichtung nach einem der Ansprüche 1 bis 4 für eine ringförmige Brennkammer, dadurch gekennzeichnet, daß die Reihe der Luftaustrittsöffnungen (19) der Zwischenschale auf einem Kreis angeordnet ist, dessen Radius zwischen dem 0,70fachen und dem 0,80fachen der halben Differenz aus dem äußeren Radius und dem inneren Radius der Brennkammer liegt.

6. Vorrichtung nach einem der Ansprüche 1 bis 5, dadurch gekennzeichnet,

daß die durch die Achse der Einspritzdüse (1) verlaufende, an der Stelle der Reihe von Luftaustrittsöffnungen (19) an die stromabwärtige Schale (10, 110, 210) angelegte Tangente die Erzeugende eines Kegels mit einem Scheitelwinkel von mehr als 110°C, vorzugsweise von annähernd 130°C, bildet,

daß die Achsen der einzelnen Luftaustrittsöffnungen (19) unter einem zwischen 20° und 30° liegenden Winkel gegenüber der Normalen zu der genannten Tangente zum Zentrum der Brennkammer weisen.

7. Vorrichtung nach einem der Ansprüche 1 für 6 für eine Brennkammer, die an ihrer Peripherie Zutrittsöffnungen für die Primärluft aufweist, dadurch gekennzeichnet,

daß der Zerstäubungsluftdurchsatz der Luftaustrittsöffnungen (19) der Zwischenschale maximal 12% des gesamten Luftdurchsatzes der Brennkammer beträgt,

und daß die übrigen 88% durch die anderen Eintrittsöffnungen zur Brennkammer und dem Zerstäubungssystem gelangen.

8. Vorrichtung nach Anspruch 7, dadurch gekennzeichnet,

daß der Prallmantel eine zweite Reihe von Primärluft-Zutrittsöffnungen (18, 118, 218) aufweist, die auf einem Kreis in der Nähe des stromaufwärtigen Kragens (14) angeordnet sind und durch die der dritte Teil des in die Zwischenkammer (16) eintretenden Primärluftdurchsatzes eindringt,

und daß die erste Reihe von Eintrittsöffnungen (17, 117a, 117b, 217b, 217a, 217b) die restlichen zwei Drittel des in die Zwischenkammer (16) eintretenden Durchsatzes zuführen.

9. Vorrichtung nach Anspruch 8, dadurch gekennzeichnet, daß eine Einrichtung (21, 22, 23, 220) vorgesehen ist, die die erste Reihe von Eintrittsöffnungen (217a) in dem Prallmantel (215) schließt, wenn die Brennkammer im Langsambetrieb arbeitet, und die das allmähliche Öffnen der Eintrittsöffnungen bis zur Vollöffnung im Vollgasbetrieb der Brennkammer steuert.

10. Vorrichtung nach Anspruch 9, dadurch gekennzeichnet, daß die Einrichtung zum Steuern des Öffnens und Schließens der Eintrittsöffnungen des Prallmantels von einem um den zylindrischen Bund (215a) des Prallmantels drehbaren Ring (220) gebildet ist, der eine der Zahl der Eintrittsöffnungen (217a) entsprechende Zahl von Öffnungen aufweist und zum Öffnen oder Schließen der Eintrittsöffnungen unter dem Einfluss eines mit ihm verbundenen Steuerhebels drehbar ist, der durch ein von dem Außengehäuse der Brennkammer getragenes Steuersystem (24) betätigbar ist.

11. Vorrichtung nach Anspruch 10 für eine ringförmige Brennkammer mit mehreren Zwischenschalen, die regelmässig über dem Umfang des Brennkammerbodens verteilt sind, dadurch gekennzeichnet, daß die Steuerhebel (21) benachbarter Zwischenschalen durch Pleuelhebel (25) in Reihe miteinander verbunden sind und durch ein einziges Steuersystem (24) gesteuert werden.

## Claims

1. Fuel injection device for a turbo-engine combustion chamber comprising at least one injector of the pneumatic atomization or preevaporation type having at least one external swirler, said device comprising an intermediate bowl arranged between the external swirler and a circular cup-shaped groove cut in the bottom of the combustion chamber; the bowl having an upstream impact lining wall provided with at least a first row of primary-air inlet orifices and, combined therewith, a casing which widens out in the downstream direction and is provided with at least one row of fuel atomization air outlet orifices directed towards the axis of the combustion chamber, the lining wall and the widened casing being rigidly joined together at each of their ends so as to form an intermediate chamber, said device being characterized in that the downstream casing (10, 110, 210) is rounded in the downstream direction while widening outwards, the external diameter of the casing being greater than that of the cup-shaped groove (13) in the bottom of the chamber, and in that the row of atomization air outlet orifices (19) of the downstream casing is regularly spaced out in a circle with a diameter greater than that of the cup-shaped groove (13) in the immediate vicinity of the periphery of the casing.

2. Device according to Claim 1, used in combination with an injector body (1) for radial annular injection of the fuel, characterized in that the bottom of the bowl (210) is cooled simultaneously by the impact of air through the inlet orifices (217a, 217b, 218) of the impact lining wall (215) and by the film of fuel (207) applied against the downstream casing (210), the fuel being atomized in the immediate vicinity of the periphery of the bowl by the atomization air emerging from the outlet orifice (19).

3. Device according to either one of Claims 1 or 2, characterized in that it comprises an upstream circular collar with an L-shaped cross-section, fixed on the internal edge of the cup-shaped groove, and a downstream circular collar (12) with an L-shaped cross-section, the short arm (12a) of which bears against the upstream collar (14) and the long arm (12b) of which extends radially towards the outside of the cup-shaped groove and forms a flat annular extension perpendicular to the axis of the injector body, in that the downstream casing (10, 110, 210) comprises a cylindrical bearing surface (10a ... 210a) bearing against the circumference (6a) of the external swirler (6) and being rounded in the downstream direction while widening outwards so as to join the external periphery of the flat annular extension (12b) of the downstream collar (12), in that the impact lining wall (15, 115, 215) comprises a cylindrical bearing surface (15a ... 215a) bearing against the bearing surface (10a ... 210a) of the downstream casing and is joined to to the upstream collar (14) and in that the row of atomization air outlet orifices (19) of the downstream casing is regularly spaced out in a circle with a diameter greater than the diameter of the cupshaped groove (13) in the immediate vicinity of the line joining the casing and the annular radial extension of the downstream collar (12).

4. Device according to any one of Claims 1 to 3, for a tubular combustion chamber, characterized in that the row of air outlet orifices (19) of the bowl is arranged in a circle with a radius between 0.70 and 0.80 times the radius of the combustion chamber.

5. Device according to any one of Claims 1 to 4, for an annular combustion chamber, characterized in that the row of air outlet orifices (19) of the bowl is arranged in a circle with a radius of between 0.70 and 0.80 times half the difference between the external and internal radii of the combustion chamber.

6. Device according to any one of Claims 1 to 5, characterized in that the tangent to the downstream casing (10, 110, 210) at right angles to the row of air outlet orifices (19) and passing through the axis of the injector (1) forms the generatrix of a cone with an angle at the top greater than 110° and preferably close to 130°, the axis of each outlet orifice (19) being oriented towards the centre of the chamber at an angle of between 20° and 30° relative to the line perpendicular to the said tangent.

7. Device according to any one of Claims 1 to 6, for a combustion chamber having on its periphery primary air intake orifices (30, 31), characterized in that the atomization air throughput of the outlet orifices (19) of the bowl is at the most equal to 12% of the total air throughput of the chamber, the remaining 88% being admitted through the other intake orifices of the chamber and of the injection system.

8. Device according to Claim 7, characterized in that the impact lining wall has a second row of primary air inlet orifices (18, 118, 218) arranged in a circle in the vicinity of the upstream collar (14) and designed to admit a third of the primary air flowing into the intermediate chamber (16), the first row of inlet orifices (17, 117a, 117b, 217b, 217a, 217b) admitting the remaining two thirds of the air flowing into the intermediate chamber (16).

9. Device according to Claim 8, characterized in that it has a means (21, 22, 23, 220) causing the orifices (217a) of the first row of inlet orifices of the impact lining wall (215) to close in the idle condition of the combustion chamber, and to open gradually until completely open in the full-throttle condition of the chamber.

10. Device according to Claim 9, characterized in that the means causing the inlet orifices of the impact lining wall to open and close consists of a ring (220) rotatably mounted about the cylindrical bearing surface (215a) of the impact lining wall and provided with the same number of orifices (217a) and able to move in rotation so as to open and close the inlet orifices by means of the action of an operating lever (21) integral with the ring and actuated by an operating system (24) mounted on the external housing of the combustion chamber.

11. Device according to Claim 10 for an annular combustion chamber comprising several intermediate bowls arranged at regular intervals on the circumference of the bottom of the chamber, characterized in that the operating levers (21) of the adjacent bowls are connected to each other in series by connecting rods (25) and are operated by a single operating system (24).

FIG. 1

EP 0 214 003 B1

F I G. 2

11

22
25
31
21
215c
215 b
220
215
221
19
217 b
211
217 a
210a
210
6
16
207
205
6

# FIG. 3

# FIG. 4

FIG. 4a

FIG. 4b

FIG.4c

EP 0 214 003 B1

FIG. 5

EP 0 214 003 B1